# EUROPEAN PATENT APPLICATION

(11) **EP 4 803 460 A1**
(43) Date of publication of application: **09.09.2026**
(21) Application number: 25771616.7
(22) Date of filing: 20.01.2025
(51) Int. Cl.: B65G 61/00, G06Q 10/083

(54) **PRODUCT TRANSPORTATION PLAN CHANGING DEVICE, PROGRAM, AND PRODUCT TRANSPORTATION PLAN CHANGING METHOD**

(30) Priority: 14.03.2024 JP 2024040388
(71) Applicant: JFE Steel Corporation, Tokyo 100-0011 (JP)
(72) Inventor: SHIMADA, Katsuki, Tokyo 100-0011 (JP); TOMIYAMA, Shinji, Tokyo 100-0011 (JP); MAEDA, Yasuhiro, Tokyo 100-0011 (JP)
(74) Representative: Scott, Stephen John
(86) International application number: PCT/JP2025/001630
(87) International publication number: WO 2025/192033

(57) **Abstract**

A product transportation plan modification apparatus (13) includes an input unit (13a) that receives input values including an initial product transportation plan and a product shipment plan, and operation information including equipment information, a destination changing unit (13e) that, when determining that there exists a destination that does not satisfy constraint conditions using an upper limit of receivable product quantity at each destination and an available receiving-operation time, both calculated based on the input values and the operation information, changes, for a transport operation selected according to a predetermined first priority order, the destination that does not satisfy the constraint conditions to another warehouse building, and an assignment changing unit (13g) that, when an evaluation value indicating variation in workload among the transport vehicles exceeds an allowable upper limit value, changes a transport vehicle with a high transport workload to another transport vehicle.

## Description

### TECHNICAL FIELD

The present disclosure relates to a product transportation plan modification apparatus, a program, and a product transportation plan modification method. The present disclosure relates in particular to a product transportation plan modification apparatus, program, and a product transportation plan modification method for transport vehicles that transport products produced in a factory to a warehouse building.

### BACKGROUND

Generally, in the production industry, products produced at a factory are initially stored in a product yard within the factory. The products are then loaded onto transport vehicles and brought into a warehouse building. Products brought into the warehouse building are stored within the warehouse building until being shipped. Product yards and warehouse buildings are often equipped with overhead cranes for handling products during loading and unloading.

When products are transported from the factory product yard to the warehouse building, the products are loaded onto transport vehicles. Most transport vehicles used for transporting products are configured to accommodate, inside the vehicle, a pallet on which products are placed. With this configuration, while products are being loaded or unloaded in a product yard or a warehouse building, a towing unit can move to perform other transport operations. Furthermore, there are multiple types of pallets, depending on the specifications of the products being loaded.

The type of pallet used is often predetermined for each product yard at a factory from which products are shipped. By assigning one transport vehicle to handle the transport operations for one product yard, the types of pallets are less prone to uneven distribution, the travel routes of the transport vehicles are simplified, and a more efficient transportation plan is achieved. However, the number of product yards at a factory that ships products out is generally greater than the number of transport vehicles used to transport the products. Therefore, it becomes necessary to assign a single transport vehicle to handle the transport operations for a plurality of product yards. Depending on how the transport vehicles and product yards are combined in the product transportation plan, the workload of the transport vehicles may become unbalanced. If the workload of the transport vehicles is unbalanced, the completion time of transport vehicles with heavy workloads will be delayed, negatively impacting the overall operational efficiency of the transport vehicles. A decrease in the overall operational efficiency of transport vehicles delays the carrying out of products from the product yard within the factory to the warehouse building. When the storage capacity of a factory product yard reaches its limit and space runs out, the result is product-yard congestion, a situation in which there is no place to store products produced at the factory. The factory production line must then be shut down, leading to increased production costs or lost opportunities. Furthermore, interruptions in temperature control or continuous processes can negatively impact product quality. Therefore, factory production line shutdowns due to product-yard congestion must be avoided in so far as possible. To eliminate imbalances in workload in actual operations, transport vehicles with lighter workloads may therefore be instructed to perform some of the operations of transport vehicles with heavier workloads.

In recent years, algorithms have been proposed to reduce the load of manual operations by having computers perform plan change operations instead of humans. For example, Patent Literature (PTL) 1 discloses a system that automatically learns and sets evaluation parameters for evaluating a product transportation plan. Furthermore, PTL 2, for example, discloses a system that supports the generation of a more efficient product transportation plan by taking into account qualitative dispatching constraints that represent user know-how.

### CITATION LIST

### Patent Literature

PTL 1: JP 2013-014387 A
PTL 2: JP 2018-020897 A

### SUMMARY

### (Technical Problem)

Therefore, to optimize the product transportation plan, it is necessary to eliminate the imbalance in the workload of the transport vehicles, as described above. Furthermore, when determining the warehouse building that is the transport destination of products, it is necessary to calculate the time required for outbound operation of the overhead crane in each warehouse building and estimate the available receiving-operation time from that value. In addition, if the product storage capacity of a warehouse building is already low, the warehouse building will not be able to accept products delivered to the warehouse building by a transport vehicle. In other words, when determining the destination warehouse building for product transport, it is necessary to consider the maximum product receiving amount at each warehouse building. Optimization of a product transportation plan thus requires calculating the workload of each transport vehicle based on the initial plan and calculating the receiving-operation capacity constraint of each destination warehouse building. Here, although various plan information changes continuously in response to fluctuations in operations, modifications to product transportation plans are often made based on human judgment.

Furthermore, even if the modification process is automated, the systems described in PTL 1 and 2 have the following problems. In the system described in PTL 1, an evaluation value is calculated for an automatically generated product transportation plan, and when a manual correction input and an estimated value as the evaluation value of the manually corrected plan are provided as input of an evaluation target value, a weighting coefficient is reset so that the evaluation value becomes the evaluation target value. However, in the system described in PTL 1, the plan modification process must be performed manually, and it is not possible to eliminate the human element from the plan modification process. In the system described in PTL 2, information regarding plan modification content, which represents user know-how, is used as input, and plan modifications are performed probabilistically based on the frequency of appearance of qualitative modification content in the history of previously generated plans. However, the system described in PTL 2 is not capable of quantitatively evaluating the workload at each logistics facility in real time.

In view of these circumstances, an object of the present disclosure is to provide a product transportation plan modification apparatus, a program, and a product transportation plan modification method that can automatically level the workload at the destinations and the workload of the transport vehicles.

### (Solution to Problem)

(1) A product transportation plan modification apparatus according to an embodiment of the present disclosure is
   a product transportation plan modification apparatus for modifying an initial product transportation plan by transport vehicles from sources to destinations in a target time period in order to optimize the initial product transportation plan, the product transportation plan modification apparatus including:
   an input unit configured to receive input values including the initial product transportation plan and a product shipment plan, and operation information including equipment information;
   a destination changing unit configured to, when determining that there exists a destination that does not satisfy constraint conditions using an upper limit of receivable product quantity at each destination and an available receiving-operation time, both calculated based on the input values and the operation information, change, for a transport operation selected according to a predetermined first priority order, the destination that does not satisfy the constraint conditions to another warehouse building; and
   an assignment changing unit configured to, when an evaluation value indicating variation in workload among the transport vehicles exceeds an allowable upper limit value, change a transport vehicle with a high transport workload to another transport vehicle.
(2) As an embodiment of the present disclosure, in (1), the product transportation plan modification apparatus further includes
   an integration unit configured to create an integrated plan based on the initial product transportation plan and any additional transport operations added at a time of execution of change processing.
(3) As an embodiment of the present disclosure, in (2),
   the predetermined first priority order includes lowering a priority of a transport operation requiring urgent transportation, lowering a priority of transport operations in descending order of values of product transport operation completion time at respective sources, lowering a priority of a transport operation for which association of product codes of products to be transported has not been completed, and lowering a priority of the additional transport operation.
(4) As an embodiment of the present disclosure, in (2) or (3), the product transportation plan modification apparatus further includes
   an output unit configured to output an integrated product transportation plan in which the initial product transportation plan and the additional transport operation have been integrated by the integration unit, processing to change a destination warehouse building in the destination changing unit and processing to change an assigned transport vehicle in the assignment changing unit have been executed, and a transport order has been adjusted according to a predetermined second priority order.
(5) As an embodiment of the present disclosure, in (4),
   the predetermined second priority order includes raising a priority in ascending order of start times of operation periods for respective transport operations, lowering a priority of a transport operation for which the assigned transport vehicle has been changed, lowering a priority of the additional transport operation, and increasing a priority in ascending order of a transport order originally set in the initial product transportation plan and the additional transport operation.
(6) As an embodiment of the present disclosure, in any one of (1) to (5),
   the evaluation value is a standard deviation of a value indicating the transport workload.
(7) A program according to an embodiment of the present disclosure is configured to cause a product transportation plan modification apparatus, for modifying an initial product transportation plan by transport vehicles from sources to destinations in a target time period in order to optimize the initial product transportation plan, to execute processing including:
   receiving input values including the initial product transportation plan and a product shipment plan, and operation information including equipment information;
   when determining that there exists a destination that does not satisfy constraint conditions using an upper limit of receivable product quantity at each destination and an available receiving-operation time, both calculated based on the input values and the operation information, changing, for a transport operation selected according to a predetermined first priority order, the destination that does not satisfy the constraint conditions to another warehouse building; and
   when an evaluation value indicating variation in workload among the transport vehicles exceeds an allowable upper limit value, changing a transport vehicle with a high transport workload to another transport vehicle.
(8) A product transportation plan modification method according to an embodiment of the present disclosure is
   a product transportation plan modification method for modifying an initial product transportation plan by transport vehicles from sources to destinations in a target time period in order to optimize the initial product transportation plan, the product transportation plan modification method including:
   receiving input values including the initial product transportation plan and a product shipment plan, and operation information including equipment information;
   when determining that there exists a destination that does not satisfy constraint conditions using an upper limit of receivable product quantity at each destination and an available receiving-operation time calculated, both based on the input values and the operation information, changing, for a transport operation selected according to a predetermined first priority order, the destination that does not satisfy the constraint conditions to another warehouse building; and
   when an evaluation value indicating variation in workload among the transport vehicles exceeds an allowable upper limit value, changing a transport vehicle with a high transport workload to another transport vehicle.

### (Advantageous Effect)

According to the present disclosure, a product transportation plan modification apparatus, a program, and a product transportation plan modification method that can automatically level the workload at the destinations and the workload of the transport vehicles can be provided.

### BRIEF DESCRIPTION OF THE DRAWINGS

In the accompanying drawings:
FIG. 1 is a schematic diagram illustrating a logistics system including product yards, warehouse buildings, and transport vehicles;
FIG. 2 is a schematic diagram illustrating an input and output configuration of a product transportation plan modification apparatus according to an embodiment of the present disclosure;
FIG. 3 is a block diagram illustrating a configuration of the product transportation plan modification apparatus;
FIG. 4 is a diagram illustrating an example of an initial product transportation plan;
FIG. 5 is a diagram illustrating an example of additional transport operations;
FIG. 6 is a diagram illustrating an example of a product shipment plan;
FIG. 7 is a diagram illustrating an example of the product inventory amount;
FIG. 8 is a diagram illustrating an example of transport vehicle travel time information;
FIG. 9 is a diagram illustrating an example of destination priority information;
FIG. 10 is a diagram illustrating an example of equipment information;
FIG. 11 is a diagram illustrating an example of a plan that integrates additional transport operations with the initial product transportation plan;
FIG. 12 is a diagram illustrating an example of a plan yielded by performing processing to change the destination warehouse building on the plan in FIG. 11;
FIG. 13 is a diagram illustrating an example of a plan yielded by performing processing to change the assigned transport vehicle on the plan in FIG. 12;
FIG. 14 is a flowchart illustrating the processing of a product transportation plan modification method;
FIG. 15 is a diagram illustrating the results of comparing the ratio of a transport operation completion time to a target time length in an Example; and
FIG. 16 is a diagram illustrating the results of comparing the transport operation completion times in the Example.

### DETAILED DESCRIPTION

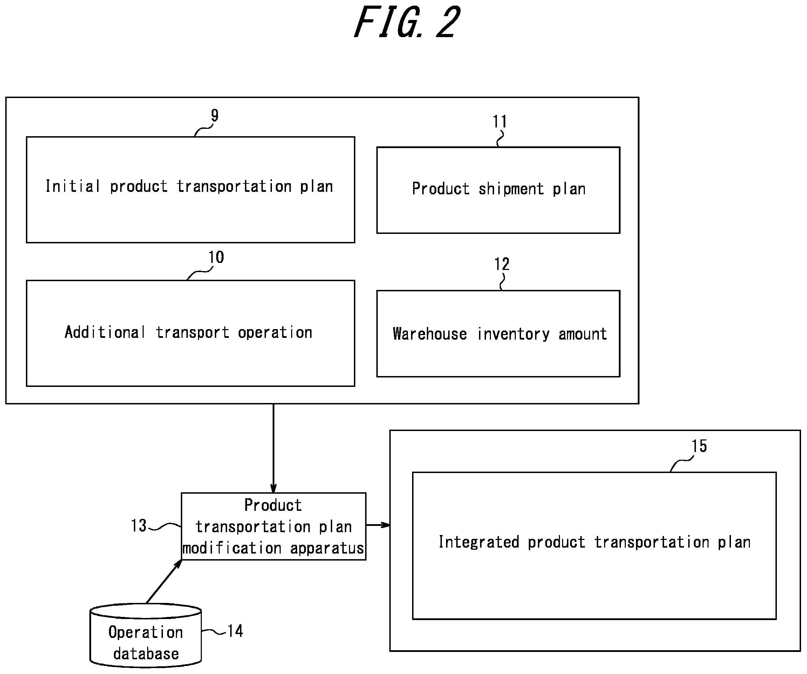

Hereinafter, a product transportation plan modification apparatus 13 (see FIG. 2), a program, and a product transportation plan modification method according to an embodiment of the present disclosure are described with reference to the drawings.

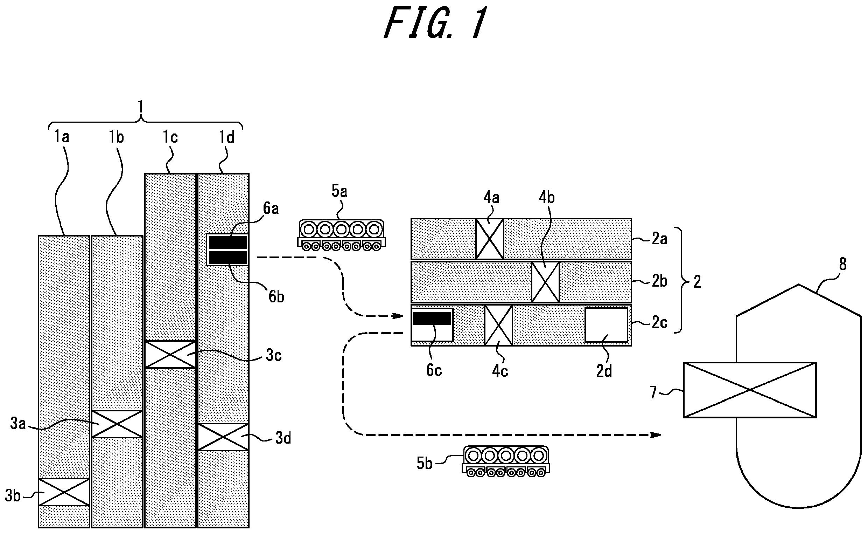

FIG. 1 is a schematic diagram illustrating a logistics system including product yards, warehouse buildings, and transport vehicles, which are the target of a product transportation plan to be changed by the product transportation plan modification apparatus 13 according to the present embodiment. A change in the product transportation plan refers to a change made for optimization. Here, the sources and destinations targeted by the product transportation plan modification apparatus 13 are not limited to specific locations, but in the present embodiment, the product yards and warehouse buildings in the logistics system illustrated in FIG. 1 will be used as examples. In FIG. 1, reference numeral 1 indicates a factory, reference numerals 1a to 1d indicate factory docks, reference numeral 2 indicates a warehouse, and reference numerals 2a to 2c indicate warehouse buildings. Furthermore, reference numerals 3a to 3d and 4a to 4c indicate overhead cranes, reference numerals 5a and 5b indicate transport vehicles, reference numerals 6a to 6c indicate pallets for product transportation, reference numeral 7 indicates a shipping crane, and reference numeral 8 indicates a transport ship.

The factory and warehouse are composed of buildings (1a to 1d and 2a to 2c) for storing products. The factory docks (1a to 1d) are also referred to as the "product yards". Each building is equipped with an overhead crane (3a to 3d and 4a to 4c) for inbound and outbound operations on products. Furthermore, the products produced in the factory are loaded onto pallets (6a and 6b), and the pallets are loaded onto a transport vehicle (5a) and transported to the designated warehouse building. As the shipping date approaches, the received products are either loaded onto a shipment buffer area (2d) by an overhead crane or loaded onto a transport vehicle (5b) together with the pallet (6c), moved to a quay near the shipping crane (7), and loaded onto the transport ship (8).

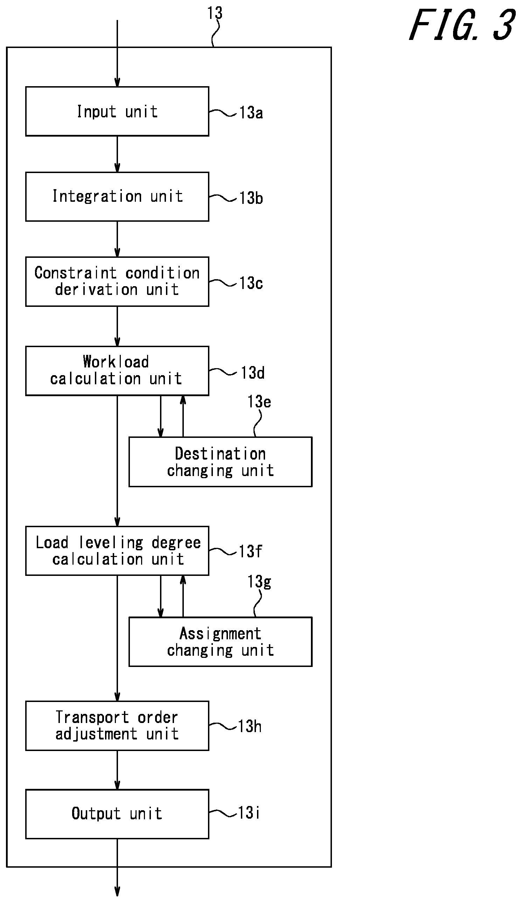

FIG. 2 is a schematic diagram illustrating the configuration of the product transportation plan modification apparatus 13 according to the present embodiment. The arrows in FIG. 2 and FIG. 3, described below, schematically illustrate the flow of data input/output and processing. As illustrated in FIG. 2, the product transportation plan modification apparatus 13 acquires an initial product transportation plan 9, a product shipment plan 11, and a warehouse inventory amount 12 as input values and executes processing of the product transportation plan modification method (for example, processing such as reassigning to a more appropriate transport vehicle). Here, the input values may further include additional transport operations 10. Details of the additional transport operations 10 will be described later. The initial product transportation plan 9 is a plan for the initial product transportation, for which transport vehicles have been provisionally assigned. Specific examples will be described later. Furthermore, the product shipment plan 11 is a plan for shipment from the warehouse to a transport ship or the like. Specific examples will be described later. The warehouse inventory amount 12 refers to the inventory amount of products in the warehouse building. Specific examples will be described later.

Here, the product transportation plan modification apparatus 13 performs processing by referring to the operation database 14. The product transportation plan modification apparatus 13 calculates the workloads at the destinations and the workloads of the transport vehicles, performs processing such as reassigning to a more appropriate transport vehicle to level these workloads automatically, and outputs the modified plan. Here, if an additional transport operation 10 occurs and is included as an input value, the product transportation plan modification apparatus 13 optimizes the plan after integrating the additional transport operation 10 and outputs the plan. Therefore, the modified plan generated by processing performed by the product transportation plan modification apparatus 13 is referred to as an integrated product transportation plan 15.

The product transportation plan modification apparatus 13 is configured by an information processing apparatus and implements changes to the product transportation plan during a time period designated by the user (hereinafter, the "target time period"). FIG. 3 is a block diagram illustrating the configuration of the product transportation plan modification apparatus 13. As illustrated in FIG. 3, the product transportation plan modification apparatus 13 functions as each of its components by an arithmetic processing device (processor) inside an information processing apparatus (computer) reading and executing a computer program. In other words, the program causes the arithmetic processing device to function as an input unit 13a, an integration unit 13b, a constraint condition derivation unit 13c, an workload calculation unit 13d, a destination changing unit 13e, a load leveling degree calculation unit 13f, an assignment changing unit 13g, a transport order adjustment unit 13h, and an output unit 13i. The functions of each unit will be described later.

The product transportation plan modification apparatus 13 may, together with network-connected devices, constitute a product transportation plan modification system. The network is, for example, the Internet. Furthermore, part of the network may be configured to include, for example, a local area network (LAN).

The product transportation plan modification system may include a terminal device used by an operator operating the product transportation plan modification apparatus 13, or an operator of a transport vehicle, to confirm the plan or instructions regarding product transportation. The terminal device includes a function to communicate the revised product transportation plan output from the product transportation plan modification apparatus 13 to at least the operator. The terminal device may be, but is not limited to, a general-purpose terminal device such as a personal computer, smartphone, or tablet. Here, the terminal device is equipped with a communication function and can acquire information regarding the modified plan for product transportation from the product transportation plan modification apparatus 13 via the network.

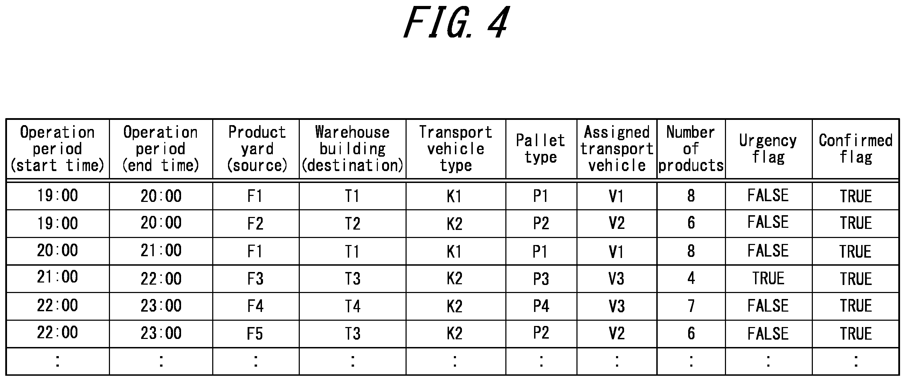

The initial product transportation plan 9 details the plans for product transportation during a scheduled operation period and includes information such as the source product yard, the destination warehouse building, and the type of pallet. Furthermore, as described above, transport vehicles are provisionally assigned in the initial product transportation plan 9. FIG. 4 illustrates an example of an initial product transportation plan 9. The meaning of each item in the initial product transportation plan 9 illustrated in FIG. 4 is as follows.

The operation period (start time) represents the scheduled start time of product transportation. The operation period (end time) represents the scheduled end time of product transportation. The product yard (source) represents the name of the product yard that is the source during product transportation. The warehouse building (destination) represents the name of the warehouse building that is the destination during product transportation. The transport vehicle type represents the type of transport vehicle used in product transportation. The pallet type represents the type of the pallet used in product transportation. The assigned transport vehicle represents the transport vehicle assigned for product transportation, and each transport vehicle is indicated by a unique identification code. The number of products represents the number of products loaded during product transportation. The urgency flag is a flag set in the product transportation plan for an operation requiring urgent transportation to the destination. The confirmed flag is a flag set in the product transportation plan for a transport operation for which association of the operation and the product codes of the products to be transported has been completed. The urgency flag and the confirmed flag are applicable if set to "TRUE" and not applicable if set to "FALSE". For example, an operation with the urgency flag set to "TRUE" indicates an operation requiring urgent transportation to the destination. Furthermore, for example, an operation with the confirmed flag set to "FALSE" indicates an operation for which association of the product codes of the products to be transported has not yet been completed.

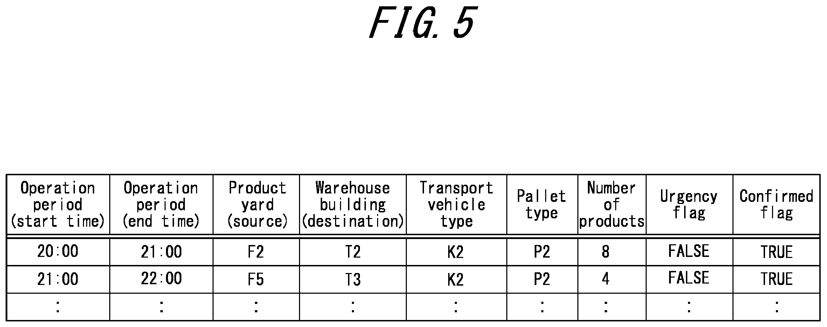

The additional transport operation 10 is a transport operation that, at the time of processing by the product transportation plan modification apparatus 13, is added to a product transportation plan to be carried out during a certain scheduled operation period. The initial product transportation plan 9 is a group of transport operations that were already set as a plan at the time the processing of the product transportation plan modification apparatus 13 is executed, whereas the additional transport operations 10 are a group of transport operations that have been added due to the occurrence of a plan modification or the like. Here, since the additional transport operations 10 are transport operations that occurred after the generation of the initial product transportation plan 9, they may include operations that require urgent transportation to a destination. FIG. 5 illustrates an example of additional transport operations 10. The meaning of each item in the additional transport operations 10 illustrated in FIG. 5 is the same as in FIG. 4.

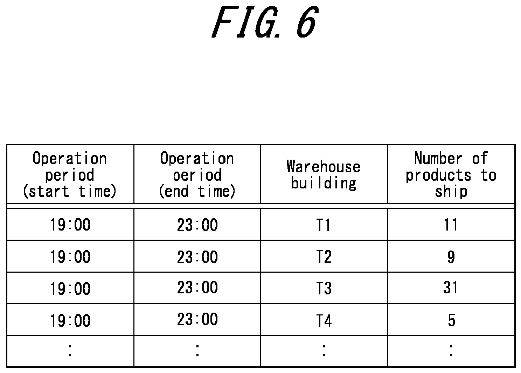

The product shipment plan 11 indicates the number of products scheduled to be shipped from the warehouse building to a shipping quay during a certain scheduled operation period. FIG. 6 illustrates an example product shipment plan 11. The meaning of each item in the product shipment plan 11 illustrated in FIG. 6 is as follows.

The operation period (start time) represents the start time of the shipping operation time period in the warehouse building. The operation period (end time) represents the end time of the shipping operation time period in the warehouse building. The warehouse building represents the name of the building where shipping operations are carried out. The warehouse building names are indicated by unique identification codes for each warehouse building. The number of products to ship represents the number of products to be shipped from the warehouse building during the operation period.

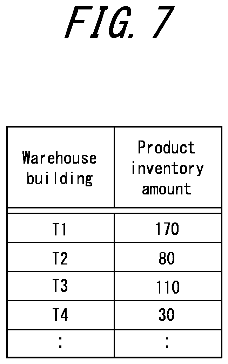

The warehouse inventory amount 12 represents the inventory amount of products in the warehouse building. In each warehouse building, the inventory amount is measured using a known method. The inventory amount in the warehouse inventory amount 12 fluctuates to reflect changes in actual measurements. FIG. 7 illustrates an example of the warehouse inventory amount 12. The meaning of each item in the warehouse inventory amount 12 illustrated in FIG. 7 is as follows.

The warehouse building represents the name of the warehouse building where the products are stored, and each warehouse building is indicated by a unique identification code. The product inventory amount refers to the number of products stored in the warehouse building.

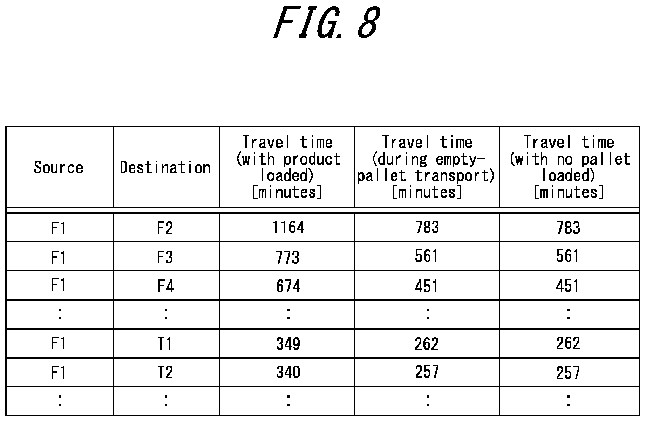

The operation database 14 stores information (operation information) related to the operation of each target facility. Examples of operation information in the present embodiment are illustrated in FIGS. 8 to 10.

FIG. 8 illustrates "transport vehicle travel time information", which is information on the travel time of transport vehicles between each facility such as the product yard and warehouse building. The source and destination are indicated by the product yard name or warehouse building name. The travel time (with product loaded) is the travel time when the vehicle is loaded with products. The travel time (during empty-pallet transport) is the travel time when an empty pallet is being transported. The travel time (with no pallet loaded) is the travel time when no pallets are loaded. Here, the travel time may be a value that does not depend on the type of transport vehicle. For example, an average value of the travel time of transport vehicles based on past performance, without distinguishing by vehicle type, may be used, or an estimated or calculated value from a travel simulator may be used.

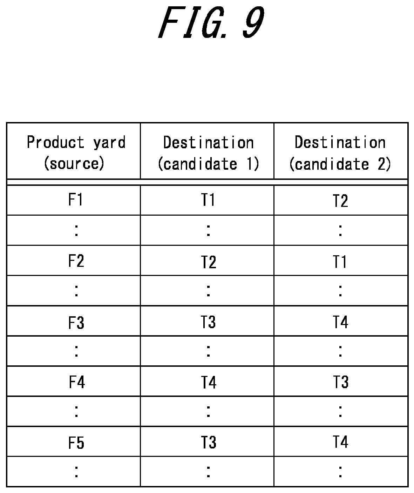

FIG. 9 illustrates the "destination priority information", which is information on the priority of candidates for destination warehouse buildings in a product transport operation from the product yard. Priority is higher as the number of candidates is lower. For example, the destination "candidate 1" has a higher priority than the destination "candidate 2".

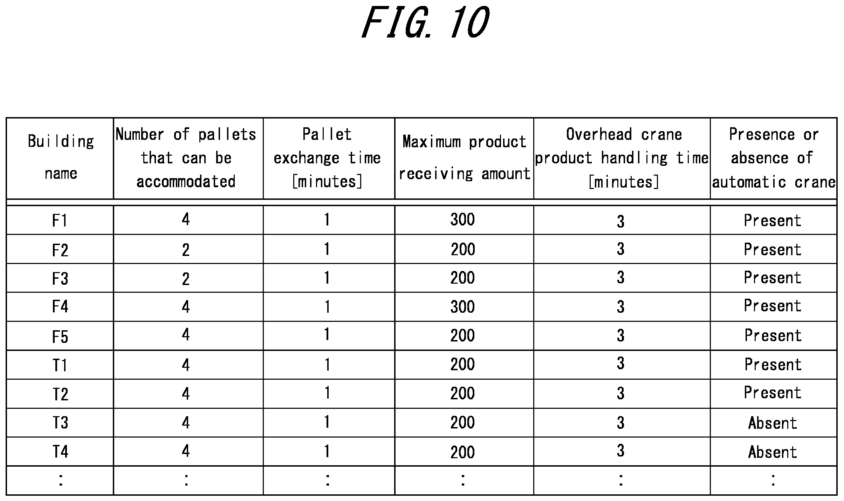

FIG. 10 illustrates "equipment information" for each product yard (factory dock) and warehouse building, including the number of pallets that can be accommodated, the pallet exchange time for each dock or building, the maximum product receiving amount, the overhead crane product handling time, and the presence or absence of an automatic crane.

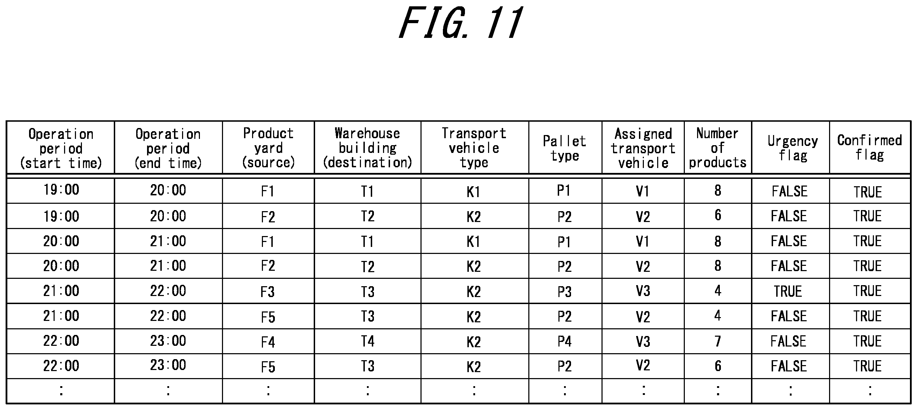

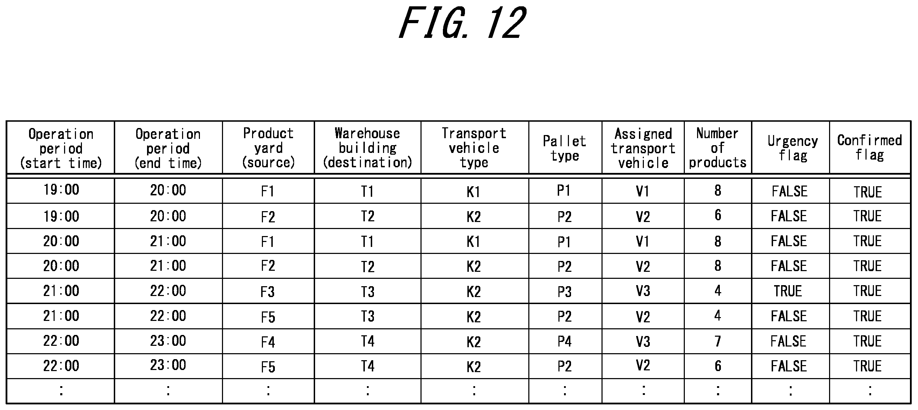

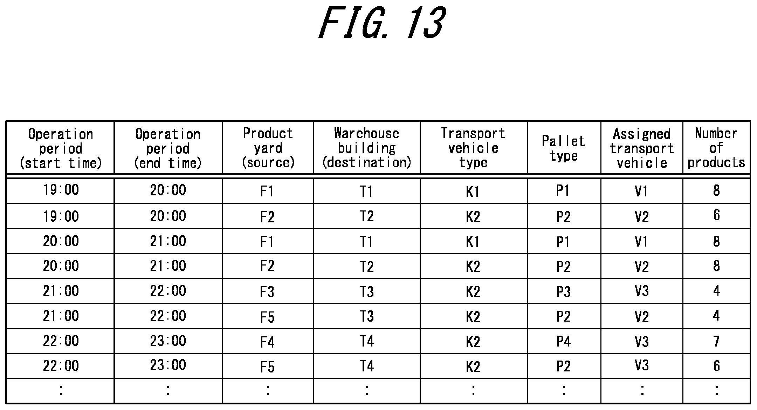

The integrated product transportation plan 15 is the result of the product transportation plan modification apparatus 13 performing leveling processing on the workloads of the destinations and the workloads of the transport vehicles, compared to the initial product transportation plan 9. The integrated product transportation plan 15 may be created by sequentially performing processing such as leveling, as illustrated in FIGS. 11 to 13. FIG. 11 illustrates an example of a plan that integrates additional transport operations 10 (see FIG. 5) with the initial product transportation plan 9 (see FIG. 4). The assigned transport vehicles for the additional transport operations 10 during integration may be set according to a predetermined rule (for example, provisionally assigning transport vehicles that are present at the source at the operation start time). FIG. 12 is a diagram illustrating an example of a plan yielded by performing processing to change the destination warehouse building on the plan in FIG. 11. In the example illustrated in FIG. 12, the warehouse building (destination) for the lowermost operation has been changed from T3 to T4. FIG. 13 is a diagram illustrating an example of a plan yielded by performing processing to change the assigned transport vehicle on the plan in FIG. 12. In the example illustrated in FIG. 13, the assigned transport vehicle for the lowermost operation has been changed from V2 to V3. The plan in FIG. 13 may correspond to the integrated product transportation plan 15, which is the result of changes to the destination warehouse building and changes to the assignment of transport vehicles that carry out operations for each instance of product transportation.

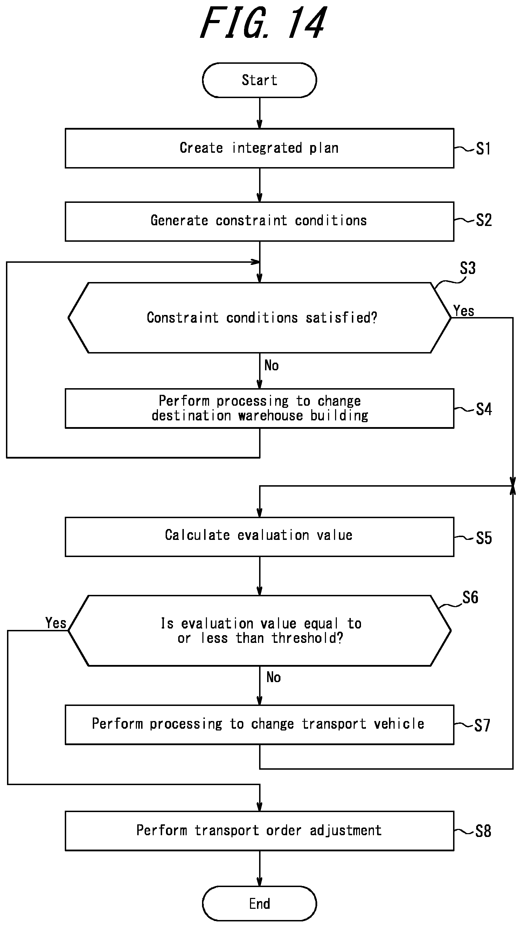

The product transportation plan modification apparatus 13 can create and automatically output an integrated product transportation plan 15 with a leveled workload by performing the following processes. The operation of the product transportation plan modification apparatus 13 will be explained with reference to the flowchart illustrated in FIG. 14.

FIG. 14 is a flowchart illustrating the processing (product transportation plan modification processing) for the product transportation plan modification method according to the present embodiment. The flowchart illustrated in FIG. 14 indicates that the product transportation plan modification apparatus 13 is started when the user provides input (including the specification of the target time period). First, the product transportation plan modification processing proceeds to step S1. The product transportation plan modification apparatus 13 extracts information related to the operation of each piece of equipment from the operation database 14 and acquires the extracted information as operation information. The extracted information includes transport vehicle travel time information, destination priority information, and equipment information. Furthermore, the product transportation plan modification apparatus 13 acquires the aforementioned input values. In the present embodiment, the input values include input from the user and specifically include the designated target time period.

In the processing of step S1, the input unit 13a receives the input values and the operation information in the operation database 14 and outputs the received input values and operation information to the integration unit 13b.

The integration unit 13b creates an integrated plan based on the initial product transportation plan 9 and the additional transport operations 10. At this time, transport vehicles are assigned to the additional transport operations 10 based on the vehicle dispatch plan of the initial product transportation plan 9. Specifically, the integration unit 13b first acquires information on the source product yard for each transport operation in the additional transport operations 10. The integration unit 13b identifies the transport vehicle assigned to the source based on the information on the source product yard for each transport operation and assigns the transport vehicle for the same source to the transport operation in the additional transport operations 10. Furthermore, for transport operations among the additional transport operations 10 for which there is no same source transport vehicle in the initial product transportation plan 9, the integration unit 13b assigns the transport vehicle with the fewest number of transport operations in the initial product transportation plan 9. In this way, the integration unit 13b completes the processing of step S1 by creating an integrated plan (see FIG. 11), and the processing proceeds to step S2.

In the processing of step S2, constraint conditions on the transport capacity of each destination warehouse building are generated based on the input values received by the input unit 13a, the operation information in the operation database 14, and the plan created by the integration unit 13b.

The constraint condition derivation unit 13c calculates the upper limit of receivable product quantity at each destination and the available receiving-operation time.

The calculation of the upper limit of receivable product quantity at each destination is as follows. Each destination warehouse building has a set maximum product receiving amount. Here, information on the maximum product receiving amount can be extracted from the equipment information in the operation database 14. The constraint condition derivation unit 13c subtracts the product inventory amount (see FIG. 7) from the maximum product receiving amount at the destination warehouse building. Additionally, at each destination warehouse building, outbound operations to release the stored products are performed. Therefore, the constraint condition derivation unit 13c subtracts the product inventory amount from the maximum product receiving amount and adds the scheduled number of products to ship during the target time period, taking the result as the upper limit of receivable product quantity at the destination warehouse building. The number of products to ship can be extracted from the product shipment plan 11.

The calculation of the available receiving-operation time is as follows. In product transportation plan, the time range for transport operations in which the plan is changed is defined as the target time period, and the length of the target time period is defined as the target time length. The time spent on outbound operations at each destination warehouse building during the target time period is calculated by multiplying the number of products to ship from each destination warehouse building by the overhead crane product handling time of the destination warehouse building, which is extracted from the equipment information (see FIG. 10). This calculated value represents the time required for the outbound operation at each destination warehouse building. By subtracting the time required for the outbound operation from the target time length, the available receiving-operation time at each destination warehouse building is obtained.

In warehouse buildings that are not equipped with an automatic crane, the overhead crane is operated manually. On the other hand, in warehouse buildings equipped with an automatic crane, the overhead crane is operated automatically. Therefore, a warehouse building without an automatic crane cannot continue operating during the operator's mealtimes and breaks (hereinafter "breaks and the like"). In contrast, warehouse buildings equipped with an automatic crane can continue operating even during breaks and the like.

If the warehouse building is not equipped with an automatic crane and the target time period includes breaks and the like, the usable time of the warehouse building can be obtained by subtracting the shipping operation time and the breaks and the like from the target time length. On the other hand, if the warehouse building is equipped with an automatic crane, the usable time of the warehouse building can be obtained by subtracting the shipping operation time from the target time length. Here, whether a warehouse building is equipped with an automatic crane can be determined based on the equipment information in the operation database 14 (see FIG. 10). This completes the processing of step S2, and the processing proceeds to the processing of step S3.

In the processing of step S3, the workload calculation unit 13d determines whether the received product amount during the target time period is equal to or less than the upper limit of receivable product quantity, and whether the product receiving-operation time at each destination warehouse building is less than or equal to the available receiving-operation time. When it is determined that there exists at least one warehouse building that does not satisfy the constraint conditions (equal to or less than the upper limit of receivable product quantity and equal to or less than the available receiving-operation time) (No in step S3), the processing proceeds to step S4. Furthermore, if the constraint conditions are satisfied (Yes in step S3), the processing proceeds to step S5.

In step S4, the destination changing unit 13e changes the destination of the transport operation from the warehouse building that did not satisfy the constraint conditions to another warehouse building. The transport operations to be modified are selected according to the following priority order (priority keys S4-1 to S4-4, first priority order). Furthermore, the destination priority information (FIG. 9) is used.

Priority key S4-1 is to "lower the priority of a transport operation requiring urgent transport to the destination warehouse building". Priority key S4-2 is to "lower the priority of transport operations in descending order of values of the product transport operation completion time at respective sources". Priority key S4-3 is to "lower the priority of transport operations for which association of product codes of products to be transported has not been completed". Priority key S4-4 is to "lower the priority of additional transport operations 10".

Priority key S4-1 indicates that, when a change is made for a product transport operation that requires urgent delivery to the destination warehouse building, the burden on operations at the product yard or warehouse is significant, and thus the priority for selecting the operation as a change target is lowered (i.e., the operation is preferably not selected as a change target). Here, the urgency flag enables a determination of whether urgent transport to the destination warehouse building is required.

In priority key S4-2, a product yard for which the product transport operation completion time is to be calculated is first set. Among the transport operations in the product transportation plan within the target time period, transport operations having the product yard in question as a source are extracted. The travel time of the transport vehicle when transporting the product-loaded pallet from the source product yard to the destination warehouse building in the extracted transport operations is extracted. In addition to this travel time, the time for the transport vehicle to move while transporting an empty pallet or to move without having a pallet loaded thereon, which are separately necessary for each product transport operation, and the required pallet exchange time within the product yard or warehouse building are added together to calculate the product transport operation completion time. Here, the travel time for each transport operation can be extracted from the transport vehicle travel time information (see FIG. 8). Furthermore, the pallet exchange time can be extracted from the equipment information (see FIG. 10). Product yards that require a long product transport operation completion time place a significant operational burden on the operator, and the processing to change the destination warehouse building has a major impact on operations; therefore, it is desirable to lower the priority.

Priority key S4-3 lowers the priority of a transport operation for which association of product codes of products to be transported has not been completed. In other words, priority key S4-3 lowers the priority of a transport operation for which the candidate destination warehouse building is not yet determined. Since changing the destination of such transport operations is unlikely to have a significant effect on load leveling at the destination warehouse building, it is desirable to lower the priority. Here, the confirmed flag enables a determination of whether association of the product codes of products to be transported has been completed.

Priority key S4-4 lowers the priority of the additional transport operations 10. Because the existing transport operations (transport operations in the initial product transportation plan 9) are scheduled to be performed earlier, changing the destination of the additional transport operation 10 is unlikely to achieve the effect of leveling the load at the destination warehouse building. Therefore, it is desirable to lower the priority of the additional transport operations 10.

After the destination is changed in step S4 (after the workload at the destination is leveled), the processing returns to step S3, where a determination is made regarding the constraint conditions.

A specific example of the processing in step S4 is as follows. In the example illustrated in FIG. 11, the target time period is from 19:00 to 23:00. The set time length is 4 hours. Suppose that in the processing in step S3, it is determined that the destination warehouse building T3 does not satisfy the constraint conditions. In FIG. 11, the transport operations for the destination warehouse building T3 are located in rows 5, 6, and 8. Among these, the transport operation to be targeted for processing to change the destination warehouse building is determined based on the aforementioned priority order. First, the priority of the transport operation in the 5^{th} row, with the urgency flag set to TRUE, is lowered. Furthermore, the priority of the transport operation in the 6^{th} row, which is an additional transport operation 10, is lowered, and the transport operation in the 8^{th} row becomes the target of processing to change the destination warehouse building. Based on the destination candidate having F5 as the source product yard in the destination priority information (FIG. 9), the destination warehouse building in the 8^{th} row of the transport operation is changed from T3 to T4. FIG. 12 illustrates the plan for implementing the processing to change the destination warehouse building (hereinafter also referred to as the "destination change plan").

In the processing in step S5, the load leveling degree calculation unit 13f calculates the product transport operation completion time for each transport vehicle and determines the transport workload value for each transport vehicle based on the calculated value. The transport workload value is a value that indicates the transport workload. The load leveling degree calculation unit 13f calculates an evaluation value based on the transport workload value. The specific calculation method is as follows.

From among the transport operations that fall within the time period of the product transportation plan, transport operations for which a transport vehicle has been assigned and for which the products to be transported have been associated are extracted. The product transport operation completion time in the extracted transport operation groups is calculated. The method for calculating the product transport operation completion time is the same as that described in the priority key S4-2 above. The ratio of the product transport operation completion time for each transport vehicle relative to the set time length is calculated, and this ratio is determined as the transport workload value. The load leveling degree calculation unit 13f calculates the transport workload value for all transport vehicles assigned to transport operations during the target time period of the product transportation plan.

The load leveling degree calculation unit 13f calculates an evaluation value based on the transport workload value of each transport vehicle. Specifically, the evaluation value is calculated by squaring the difference between the transport workload of each transport vehicle and the average transport workload, summing all of the squared values to obtain a cumulative value, dividing the cumulative value by the number of transport vehicles, and then taking the square root of the result. In other words, in the present embodiment, the evaluation value is the standard deviation of the transport workload value.

In the processing in step S6, it is determined whether the evaluation value from step S5 is equal to or less than a threshold. If even one transport vehicle has an evaluation value exceeding the threshold (No in step S6), the processing proceeds to step S7. If the evaluation value is equal to or less than the threshold (Yes in step S6), the processing proceeds to step S8.

In the processing in step S7, the assignment changing unit 13g changes a portion of the transport operation of a transport vehicle with a high transport workload to another transport vehicle. The transport operation selected to be changed is the transport operation, among the transport operations targeted for the processing to change the assigned transport vehicle, that is scheduled for the latest delivery time. The transport vehicle selected to be changed is the transport vehicle with the lowest transport workload.

After the assigned transport vehicle is changed in step S7 (after the workloads of the transport vehicles are leveled), the processing returns to step S5, and the transport workload value and evaluation value for each transport vehicle are calculated.

A specific example of the process in step S7 is as follows. In the example in FIG. 12, the transport operations for which the confirmed flag is TRUE are extracted from the destination change plan. Suppose that in step S5, the transport workload value and evaluation value for each transport vehicle are calculated, and in the processing of step S6, it is determined that the evaluation values of the transport vehicles exceed the threshold (the standard deviation is greater than a predetermined threshold, and there is a large variation in workload among the transport vehicles). Here, the threshold corresponds to the allowable upper limit value of variation in workload between transport vehicles, which is predetermined based on past performance data. Furthermore, it is determined that vehicle V2 has the highest transport workload value, and the transport operation scheduled for the latest time (8^{th} row) is selected as the target for the processing to change the assigned transport vehicle. Since it was determined that the transport vehicle with the minimum workload value is V3, the transport vehicle for the target transport operation (8^{th} row) is changed from V2 to V3. FIG. 13 illustrates the plan after the processing to change the assigned transport vehicle has been performed.

In the processing in step S8, the transport order adjustment unit 13h adjusts (reorders) the transport order based on the input values and the plan created by the assignment changing unit 13g. The transport order is rearranged according to the following priority order (priority keys S8-1 to S8-4, second priority order).

Priority key S8-1 is to "raise the priority in ascending order of start times of operation periods for respective transport operations". Priority key S8-2 is "to lower the priority of a transport operation for which the assigned transport vehicle has been changed". Priority key S8-3 is "lower the priority of the additional transport operation 10". Priority key S8-4 is to "increase the priority in ascending order of the transport order originally set in the initial product transportation plan 9 and the additional transport operations 10".

The transport order is adjusted according to the priority keys S8-1 to S8-4. This completes the processing in step S8, and the output unit 13i outputs the result. Here, the processing in step S8 may be omitted. In this case, the plan on which the processing to change the assigned transport vehicle was performed corresponds to the final integrated product transportation plan 15.

The integration unit 13b integrates the initial product transportation plan 9 and the additional transport operations 10, after which the destination changing unit 13e performs the processing to change the destination warehouse building and the assignment changing unit 13g performs the processing to change the assigned transport vehicle. The output unit 13i outputs the integrated product transportation plan 15, in which the transport order has been adjusted by the transport order adjustment unit 13h.

The output unit 13i may output the integrated product transportation plan 15, with the transport order adjusted, via the network to a terminal device used by the operator operating the product transportation plan modification apparatus 13 or the operator of the transport vehicle. Here, the terminal device is used by the operator operating the product transportation plan modification apparatus 13 to confirm the modified plan for product transport and by the operator of the transport vehicle to confirm the modified plan for product transport as a modified command.

Furthermore, the transport vehicle could be an automated transport vehicle that autonomously travels along a route set based on 3D map data from LiDAR (Light Detection and Ranging) sensors and information from the Global Navigation Satellite System. In this case, the output unit 13i may output the modified product transportation plan to a vehicle control server that, via wireless communication, provides travel route settings or start and stop instructions to automated transport vehicles.

The effects of the present disclosure will be described in detail below based on examples, but the present disclosure is not limited to these examples.

In the present Example, the results are illustrated for the creation of an integrated product transportation plan 15 using the method of the above embodiment for transporting products by transport vehicles from a product factory to warehouse buildings where the products are stored. Integrated product transportation plans 15 were created for 44 target time periods, and as a Comparative Example, product transportation plans were manually created for the same 44 target time periods.

A simulator that could model logistics facilities and perform simulations of product logistics on a computer was used. The integrated product transportation plan 15 according to the method of the above embodiment was input into the simulator, and simulation results were obtained. The simulation calculated the time it took for all transport vehicles to complete all transport operations from the start of product transport during each target time period. Hereinafter, this time value is taken as the transport operation completion time for each target time period. Similarly, the result of creating product transportation plans manually was input into the simulator, and simulation results were obtained. The transport operation completion time during each target time period was similarly calculated and used for comparison.

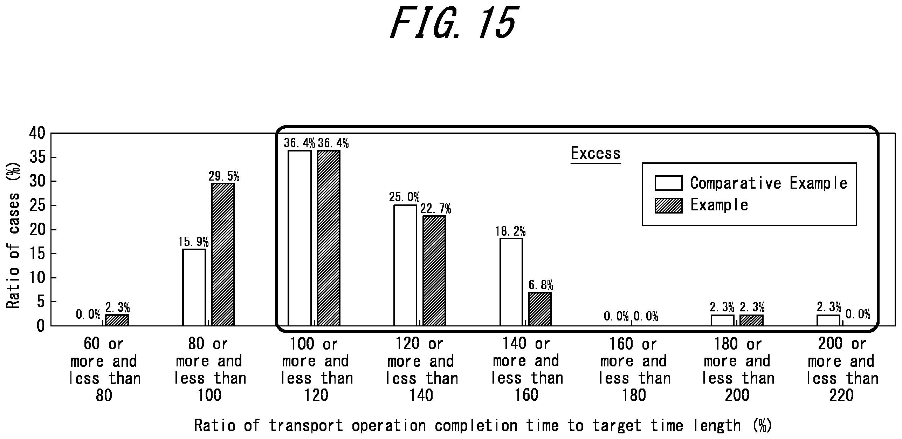

FIG. 15 illustrates, on the horizontal axis, the ratio of the transport operation completion time during the target time period to the target time length, divided into predetermined ranges. The number of corresponding cases is illustrated as a histogram representing the ratio to the total number of cases (44 cases) within the target time period, and the Comparative Example and Example are compared within each range. On the horizontal axis, portions exceeding 100 % indicate instances where the transport operation completion time exceeded the target time length (excess).

As illustrated in FIG. 15, in manual product transportation planning, approximately 84 % of the transport operation completion time exceeded the set time length, whereas in product transportation planning using the method of the above embodiment, this figure was reduced to approximately 68 %.

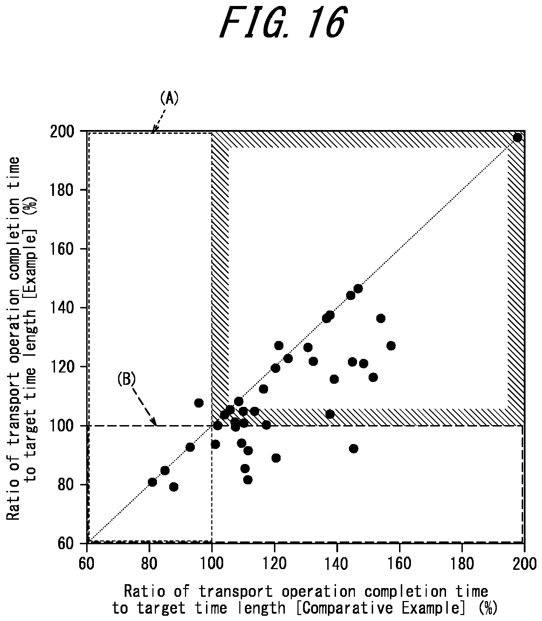

FIG. 16 illustrates a scatter plot comparing the transport operation completion times for each target time period. The horizontal axis represents the ratio of the transport operation completion time to the target time length in each target time slot of the manual product transportation plan. The vertical axis represents the ratio of the transport operation completion time to the target time length in each target time slot of the product transportation plan according to the method of the above embodiment.

Points in the region above the diagonal in FIG. 16 indicate that the transport operation completion time in the manual product transportation plan is shorter. Furthermore, points in the region below the diagonal indicate that the transport operation completion time using the product transportation plan by the method of the above embodiment is shorter (an improvement compared to the Comparative Example).

Points within the region indicated by (A) in FIG. 16 represent how the transport operation completion time in the manual product transportation plan is shorter than (does not exceed) the target time length. Points located within the area indicated by (B) in FIG. 16 represent how the transport operation completion time using the product transportation plan by the method of the above embodiment is shorter than (does not exceed) the target time length. Points outside both areas (A) and (B) (points in the area enclosed by the shaded frame) represent the possibility that the workload is excessive at the initial product transportation plan 9 stage.

As illustrated in FIG. 16, the workload distribution of the transport vehicles was insufficient in the Comparative Example, resulting in a strong tendency for the transport operation completion time to exceed the target time length. On the other hand, in the Example, there were fewer cases in which the transport operation completion time was greater than the target time length, and there were several cases in which the transport operation completion time was significantly reduced. Accordingly, it can be considered that, compared with the Comparative Example, the Example can stably create a plan in which load leveling is appropriately performed.

As described above, the product transportation plan modification apparatus 13, program, and product transportation plan modification method according to the present embodiment automatically perform the modification of the assignment of transport vehicles from the source to the destination and the modification of the workload at the destination through the above configuration and processes. In other words, according to the present embodiment, the workloads at the destinations and the workloads of the transport vehicles can be automatically leveled. Furthermore, since the workload leveling can be performed automatically, the burden associated with conventional manual modification of product transportation plans is eliminated. The risk of product-yard congestion in the factory is also mitigated, thereby avoiding shutdowns of the factory production line and reducing negative impacts on product quality in so far as possible.

Although embodiments of the present disclosure have been described based on the drawings and examples, it should be noted that a person skilled in the art may make variations and modifications based on the present disclosure. Therefore, it should be noted that such variations and modifications are included within the scope of the present disclosure. For example, functions or the like included in each component, each step, or the like can be rearranged without logical inconsistency, and a plurality of components, steps, or the like can be combined into one or divided. An embodiment according to the present disclosure may also be realized as a storage medium (for example, a non-transitory computer-readable recording medium) having recorded thereon a program to be executed by a processor included in an apparatus. Such embodiments are also to be understood as included in the scope of the present disclosure.

### REFERENCE SIGNS LIST

- 1: Factory
- 1a to 1d: Factory dock (product yard)
- 2: Warehouse
- 2a to 2c: Warehouse building
- 2d: Shipment buffer area
- 3a to 3d, 4a to 4c: Overhead crane
- 5a, 5b: Transport vehicle
- 6a to 6c: Pallet
- 7: Shipping crane
- 8: Transport ship
- 9: Initial product transportation plan
- 10: Additional transport operation
- 11: Product shipment plan
- 12: Warehouse inventory amount
- 13: Product transportation plan modification apparatus
- 13a: Input unit
- 13b: Integration unit
- 13c: Constraint condition derivation unit
- 13d: Workload calculation unit
- 13e: Destination changing unit
- 13f: Load leveling degree calculation unit
- 13g: Assignment changing unit
- 13h: Transport order adjustment unit
- 13i: Output unit
- 14: Operation database
- 15: Integrated product transportation plan

## Claims

1. A product transportation plan modification apparatus for modifying an initial product transportation plan by transport vehicles from sources to destinations in a target time period in order to optimize the initial product transportation plan, the product transportation plan modification apparatus comprising:
an input unit configured to receive input values including the initial product transportation plan and a product shipment plan, and operation information including equipment information;
a destination changing unit configured to, when determining that there exists a destination that does not satisfy constraint conditions using an upper limit of receivable product quantity at each destination and an available receiving-operation time, both calculated based on the input values and the operation information, change, for a transport operation selected according to a predetermined first priority order, the destination that does not satisfy the constraint conditions to another warehouse building; and
an assignment changing unit configured to, when an evaluation value indicating variation in workload among the transport vehicles exceeds an allowable upper limit value, change a transport vehicle with a high transport workload to another transport vehicle.

2. The product transportation plan modification apparatus according to claim 1, further comprising an integration unit configured to create an integrated plan based on the initial product transportation plan and an additional transport operation added at a time of execution of change processing.

3. The product transportation plan modification apparatus according to claim 2, wherein the predetermined first priority order includes lowering a priority of a transport operation requiring urgent transportation, lowering a priority of transport operations in descending order of values of product transport operation completion time at respective sources, lowering a priority of a transport operation for which association of product codes of products to be transported has not been completed, and lowering a priority of the additional transport operation.

4. The product transportation plan modification apparatus according to claim 2 or 3, further comprising an output unit configured to output an integrated product transportation plan in which the initial product transportation plan and the additional transport operation have been integrated by the integration unit, processing to change a destination warehouse building in the destination changing unit and processing to change an assigned transport vehicle in the assignment changing unit have been executed, and a transport order has been adjusted according to a predetermined second priority order.

5. The product transportation plan modification apparatus according to claim 4, wherein the predetermined second priority order includes raising a priority in ascending order of start times of operation periods for respective transport operations, lowering a priority of a transport operation for which the assigned transport vehicle has been changed, lowering a priority of the additional transport operation, and increasing a priority in ascending order of a transport order originally set in the initial product transportation plan and the additional transport operation.

6. The product transportation plan modification apparatus according to any one of claims 1 to 5, wherein the evaluation value is a standard deviation of a value indicating the transport workload.

7. A program configured to cause a product transportation plan modification apparatus, for modifying an initial product transportation plan by transport vehicles from sources to destinations in a target time period in order to optimize the initial product transportation plan, to execute processing comprising:
receiving input values including the initial product transportation plan and a product shipment plan, and operation information including equipment information;
when determining that there exists a destination that does not satisfy constraint conditions using an upper limit of receivable product quantity at each destination and an available receiving-operation time, both calculated based on the input values and the operation information, changing, for a transport operation selected according to a predetermined first priority order, the destination that does not satisfy the constraint conditions to another warehouse building; and
when an evaluation value indicating variation in workload among the transport vehicles exceeds an allowable upper limit value, changing a transport vehicle with a high transport workload to another transport vehicle.

8. A product transportation plan modification method for modifying an initial product transportation plan by transport vehicles from sources to destinations in a target time period in order to optimize the initial product transportation plan, the product transportation plan modification method comprising:
receiving input values including the initial product transportation plan and a product shipment plan, and operation information including equipment information;
when determining that there exists a destination that does not satisfy constraint conditions using an upper limit of receivable product quantity at each destination and an available receiving-operation time, both calculated based on the input values and the operation information, changing, for a transport operation selected according to a predetermined first priority order, the destination that does not satisfy the constraint conditions to another warehouse building; and
when an evaluation value indicating variation in workload among the transport vehicles exceeds an allowable upper limit value, changing a transport vehicle with a high transport workload to another transport vehicle.
